# EUROPÄISCHE PATENTSCHRIFT

(11) **EP 1 162 430 B1**
(45) Veröffentlichungstag und Bekanntmachung des Hinweises auf die Patenterteilung: **27.12.2006**
(21) Anmeldenummer: 00112438.7
(22) Anmeldetag: 09.06.2000
(51) Int. Cl.: G01B 11/10

(54) **Messvorrichtung für Betonstabstähle**
Measuring device for concrete reinforcing rods
Dispositif de mesure pour fers à béton

(43) Veröffentlichungstag der Anmeldung: 12.12.2001
(73) Patentinhaber: ZUMBACH ELECTRONIC AG, CH-2552 Orpund (CH)
(72) Erfinder: Serra Emperador, Emilio, 08024 Barcelona (ES)
(74) Vertreter: Köster, Hajo

(56) Entgegenhaltungen:
- EP-A- 0 462 431
- FR-A- 2 729 217
- US-A- 4 416 541
- PATENT ABSTRACTS OF JAPAN vol. 1995, no. 11, 26. Dezember 1995 (1995-12-26) -& JP 07 218227 A (HITACHI METALS LTD), 18. August 1995 (1995-08-18)
- PATENT ABSTRACTS OF JAPAN vol. 005, no. 191 (P-092), 5. Dezember 1981 (1981-12-05) -& JP 56 117107 A (SUMITOMO METAL IND LTD), 14. September 1981 (1981-09-14)

## Beschreibung

Die vorliegende Erfindung betrifft ein Verfahren zur optischen Erfassung von Abmessungen, insbesondere von Durchmessern, eines länglichen Objektes während oder nach dessen Herstellung, das sich in seiner Längsrichtung mit hoher Geschwindigkeit kontinuierlich fortbewegt. Darüber hinaus betrifft die Erfindung eine Vorrichtung zur Durchführung dieses Verfahrens.

Aus der EP-A 0 462 431 ist eine Vorrichtung mit einem Laserscanner zur Bestimmung des Außendurchmessers von Tabletten beziehungsweise Pellets bekannt. Der Laserscanner besitzt eine Quelle für einen Laserstrahl und einen Empfänger, welche auf gegenüberliegenden Seiten eines linearen Weges aus aneinandergereihten Tabletten angeordnet sind. Der Laserstrahl erstreckt sich dabei in einer nichtorthogonalen Richtung zur gemeinsamen Achse der aneinandergereihten Tabletten. Dadurch wird vermieden, dass die benachbarten Enden der in einer Reihe angeordneten Tabletten detektiert werden.

Aus der JP 56117107 A ist eine Vorrichtung und ein Verfahren zur Bestimmung des Profils von länglichen Produkten bekannt. Dabei berühren Laserstrahlen das zu vermessende Profil tangential. Aus den dabei ermittelten Daten wird das Profil des länglichen Produktes berechnet.

Aus der US-A-4,416,541 sind ein Verfahren und eine Vorrichtung zur Bestimmung einer physikalischen Größe eines extrudierten Elementes bekannt, das durch ein Kühlbad geleitet wird. Insbesondere wird dabei der Durchmesser des extrudierten Elements mit Hilfe eines Laserstrahles bestimmt.

Bei der Herstellung länglicher Objekte, wie beispielsweise von Rohren, Kabel und dergleichen, ist die Maßhaltigkeit, insbesondere der Durchmesser, derartiger Produkte der für die Qualität maßgebende Faktor. Zur Vermeidung eines hohen Ausschußanteils und damit zur Erzielung einer hohen Wirtschaftlichkeit der Herstellungsverfahren ist es bekannt, bereits während der Herstellung die Maßhaltigkeit dieser Produkte durch entsprechende Meßvorgänge, quasi in Echtzeit, zu überwachen und gegebenenfalls die Herstellungsparameter darauf abzustimmen.

Im heutigen Stand der Technik kommen bei dieser "Echtzeit"-Kontrolle auch optische Meßverfahren zum Einsatz, die berührungslos arbeiten. Bei der Herstellung länglicher Produkte, die auf ihre Durchmesser hin überwacht werden, bedienen sich diese Meßverfahren vorzugsweise dem Prinzip der "Schattenmessung", bei dem der Schatten eines das Objekt schneidenden Lichtstrahls als Meßwert für den Durchmesser detektiert wird.

Bei rotationssymmetrischen oder ovalen Produkten haben sich optische Meßverfahren durchgesetzt, bei denen zumindest zwei Lichtstrahlen zum Einsatz kommen. Hierbei schneidet ein erster Lichtstrahl das zu vermessende Objekt in einem bestimmten Winkel, während ein zweiter Lichtstrahl ebenfalls in einem bestimmten Winkel auf das Objekt trifft, wobei beide Lichtstrahlen wiederum um einen bestimmten Winkel zueinander versetzt sind. Die als Meßwerte dabei detektierten Schatten werden in Echtzeit miteinander korreliert und mit Ist-Parametern verglichen.

Eine derartige Vorrichtung zur Bestimmung der transversalen Abmessungen einer optische Faser ist aus der FR-A 2 729 217 bekannt.

In den aus dem Stand der Technik bekannten Verfahren treffen die Lichtstrahlen hierbei bevorzugt in relativ steilen Neigungswinkeln auf das sich mit hoher Geschwindigkeit fortbewegende Produkt. Dies ist bei Produkten, wie isolierten Elektrokabeln, extrudierten Rohren oder dergleichen, die eine glatte bzw. ebene Umfangsoberfläche aufweisen, unproblematisch, da über die Schattenbildung stets der äußere Durchmesser meßwerttechnisch aufgenommen wird.

Im Fall von Produkten, die sich durch bestimmte Oberflächenstrukturen auf deren Umfang auszeichnen, führen derartige Meßverfahren zu verfälschten Ergebnissen, da die Schattenbildung nicht unbedingt dem Grunddurchmesser des Objekts entsprechen muß. So stoßen solche Verfahren beispielsweise bei der Herstellung von Betonstabstählen auf Probleme. Betonstabstähle weisen auf ihrer Umfangsoberfläche Rippen oder ähnliche Profilgestaltungen auf, die diese nicht voll umfänglich umlaufen, sondern meist auf einander gegenüberliegenden Seiten des Stabs zueinander versetzt und unter bestimmten Neigungswinkeln angeordnet sind.

Treffen nun Lichtstrahlen der optischen Vermessung unter relativ steilen Winkeln auf solche Betonstabstähle, ergeben sich unterschiedliche Schattenwerte, wenn gerade eine solche Rippe oder Oberflächenkontur getroffen wird.

Darüber hinaus wohnt der Herstellung solcher länglicher Stäbe oder sonstiger länglicher Produkte aus Stahl ein gewisses Gefahrenpotential inne, das bisher die Anwendung derartiger optischer Meßverfahren zur optischen Erfassung der Durchmesser dieser Produkte während deren Herstellung ausschloß.

Diese Produkte, insbesondere Betonstabstähle, werden in einer Stahlwälzvorrichtung im noch glühenden Zustand unter hohen Geschwindigkeiten gewalzt, die in einem Bereich von 100 - 200 km/h liegen können. Aufgrund der hohen Wälzgeschwindigkeit sind Führungen für diese Objekte, wenn sie freiliegen sollen, unumgänglich.

Zur Anwendung der aus dem Stand der Technik bekannten optischen Meßverfahren ist jedoch zumindest ein gewisse Wegstrecke vonnöten, die das glühende Produkt freiliegend durchlaufen muß, um für die optische Meßeinrichtung und deren Lichtstrahlen zu Zwecken einer einwandfreien Messung zugänglich zu sein.

Aufgrund der noch leichten Verformbarkeit des glühenden Objektes besteht die Gefahr, daß beim Austritt an der Stahlwälzvorrichtung sich das fortbewegende Objekt innerhalb einer solchen freien Wegstrecke verformt und deshalb nicht eine dem Ausgang der Stahlwälzvorrichtung gegenüberliegende Führungseinrichtung trifft und an dieser anstößt, so daß sich innerhalb weniger Sekunden mehrere hundert Meter glühenden Materials aufstauen können mit der Gefahr für die sich in nächster Nähe befindlichen Menschen und Meßeinrichtungen.

Ausgehend von diesen Nachteilen ist es die Aufgabe der vorliegenden Erfindung sowohl ein Verfahren als auch eine Vorrichtung zur Durchführung dieses Verfahrens bereitzustellen, die eine optische Erfassung von Abmessungen sich mit hoher Geschwindigkeit fortbewegender länglicher Produkte, insbesondere von glühenden Betonstabstählen mit Oberflächenprofilen, gestatten, ohne daß die bisherigen Produktionsgeschwindigkeiten herabgesetzt werden müssen.

Erfindungsgemäß wird diese Aufgabe gelöst durch ein Verfahren mit den Merkmalen des Anspruches 1 und durch eine Vorrichtung mit den Merkmalen des Anspruches 6.

Indem erfindungsgemäß die Lichtstrahlen an der Meßstelle auf das Objekt nicht mehr in einem steilen Winkel auftreffen, sondern dieses jeweils unter einem flachen Winkel schneiden, der vorzugsweise 10 bis 40° und insbesondere bevorzugt im wesentlichen 20° beträgt, lassen sich Oberflächenprofile, wie Rippen der Betonstabstähle, weitestgehend ignorieren, so daß keine Verfälschung der Durchmesserwerte durch die Rippenstruktur bei der Anwendung eines solchen Verfahrens in Erscheinung tritt. Selbstverständlich kann der Auftreffwinkel der Lichtstrahlen in Abhängigkeit von unterschiedlichen Oberflächenausgestaltungen bzw. -profilen variiert werden, so daß deren Einflüsse auf die Schattenbildung jeweils ausgeglichen werden können.

In einer bevorzugten Ausführungsform werden diese Lichtstrahlen um die Längsachse des sich fortbewegenden Objektes gedreht derart, daß sie eine Kreiselbewegung vollführen, wobei der Fixpunkt dieser Kreiselbewegung in der Meßstelle liegt.

In einer weiteren bevorzugten Ausführungsform ist diese Kreiselbewegung begrenzt derart, daß die Lichtstrahlen um einen bestimmten Winkelbetrag hin und her pendeln.

In beiden Ausführungsformen wird damit die gesamte Umfangsoberfläche bzw. Ovalität des Objektes gemessen, wobei stets die entsprechenden Meßwerte der Schatten beider Lichtstrahlen miteinander korreliert werden.

Zum Einsatz kommen hierbei in die Breite abgelenkte Lichtstrahlen, vorzugsweise jedoch Laserstrahlen.

Zur Durchführung dieses Verfahrens dient gemäß der Erfindung eine Vorrichtung, in der das sich fortbewegende glühende Objekt in einer Schutzeinrichtung geführt wird, die zwischen den Lichtquellen auf der einen Seite und den entsprechenden Empfängern auf der gegenüberliegenden Seite der gesamten optischen Meßeinrichtung angeordnet ist. Die Meßstelle befindet sich dabei innerhalb dieser Schutzeinrichtung. Hierzu weist die Schutzvorrichtung einen ersten und einen zweiten Schlitz auf, die diese vollständig durchsetzen.

Die Schlitze durchsetzen die Schutzeinrichtung unter Winkeln, die den Auftreffwinkeln der Lichtstrahlen entsprechen, so daß diese die Schlitze brechungsfrei durchqueren und an der Meßstelle das Objekt in der Schutzeinrichtung schneiden können. Ebenso wie die Lichtstrahlen sind die Schlitze in der Schutzeinrichtung zueinander in der zur Längsachse des sich fortbewegenden Objektes senkrechten Projektionsebene um einen entsprechenden Winkel ausgerichtet.

In einer bevorzugten Ausführungsform ist diese Schutzeinrichtung in einer Halterung um die Längsachse des durchlaufenden Objektes drehbar gelagert, so daß sie zusammen mit der optischen Meßeinrichtung, die ebenfalls drehbar gelagert ist, synchron die entsprechenden Verfahrensschritte durchzuführen vermag.

Im folgenden soll die Erfindung anhand eines Ausführungsbeispieles näher erläutert werden. In der Zeichnung zeigt
- Fig. 1: eine schematische Darstellung der Vorrichtung zur Durchführung des Verfahrens gemäß der Erfindung; und
- Fig. 2: eine schematische Darstellung der Schutzeinrichtung in zwei Ansichten mit und ohne diese durchquerenden Lichtstrahlen.

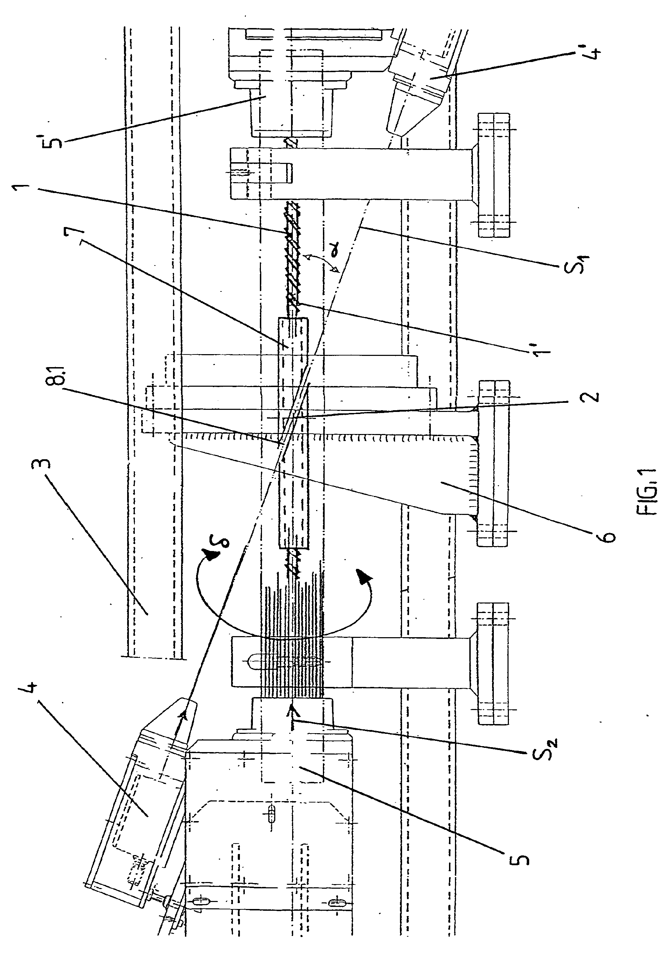

In der Figur 1 ist die Vorrichtung gemäß der Erfindung gezeigt, wie sie am Austritt einer nicht näher dargestellten Stahlwälzvorrichtung angeordnet ist.

Die Vorrichtung weist ein Gestell 3 auf, das von dem Objekt in der Form eines Betonstabstahls 1 mit auf dessen Umfang angeordneten Rippen 1' im glühenden Zustand, in der Darstellung der Figur 1 von rechts nach links, mit hoher Geschwindigkeit durchlaufen wird. Dabei wird der Betonstabstahl 1 von einer Schutzeinrichtung 7 geführt, die wiederum in einer Halterung 6 des Gestells 3 drehbar gelagert ist.

Das Gestell 3 weist eine optische Meßeinrichtung in der Form zweier Laserscanner auf. In der Fig. 1 linksseitig der Schutzeinrichtung 7 sind auf dem Gestell 3 zwei Sender 4 und 5 angeordnet, denen rechtsseitig der Schutzeinrichtung 7 entsprechende Empfänger 4' und 5' in direkter Verlängerung der jeweiligen Strahlengänge gegenüberliegen.

Die von den Sender 4 und 5 emittierten Laserstrahlen S₁ und S₂ schneiden den Betonstabstahl 1 innerhalb der Schutzeinrichtung 7 an einer Meßstelle 2. Die dabei auftretenden Schatten 9 bzw. 9' werden von den Empfängern 4' und 5' der beiden Laserscanner detektiert.

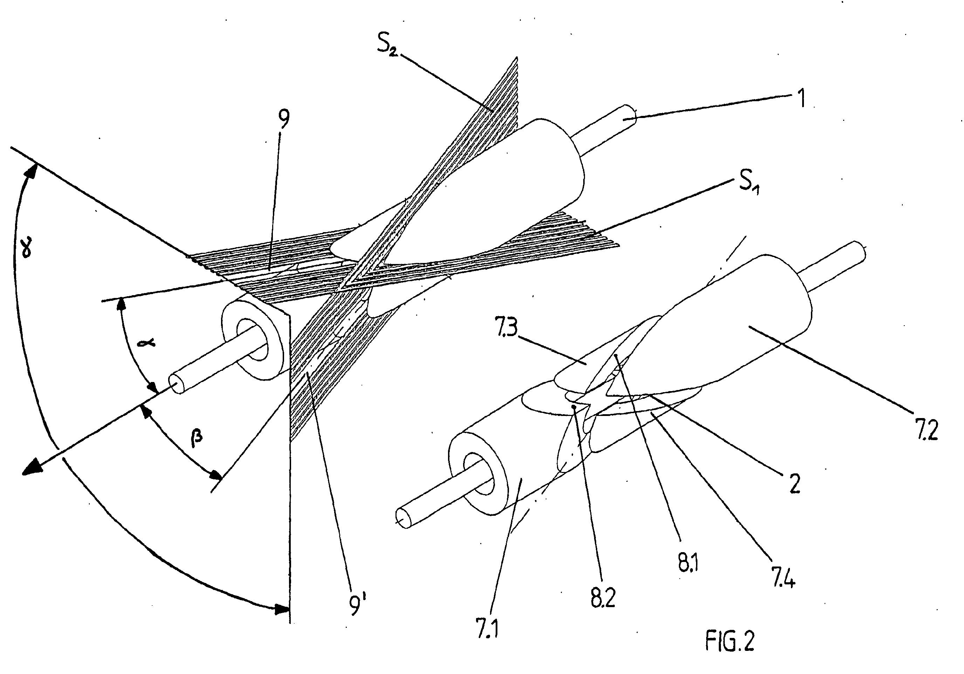

Zu diesem Zweck weist die Schutzeinrichtung 7 entsprechende Schlitze 8.1 und 8.2 auf. Wie in der Fig. 2 deutlich zu erkennen ist, wird die Schutzeinrichtung 7 durch die Anordnung der Schlitze 8.1 und 8.2 in vier voneinander getrennte Teilstücke 7.1, 7.2, 7.3 und 7.4 zerschnitten, die jeweils in ihrer entsprechenden Lage zueinander innerhalb der Halterung 6 fixiert sind.

Die Schlitze 8.1 und 8.2 durchsetzen die Schutzeinrichtung 7 jeweils in den Winkeln α und β, die folglich den Auftreff- bzw. Schnittwinkeln der Laserstrahlen S₁ und S₂ entsprechen, so daß derer Durchlaß ermöglicht ist. Die Schlitze 8.1 und 8.2 weisen dabei noch eine solche Breite auf, die einerseits den brechungsfreien Durchgang der Laserstrahlen S₁ und S₂ gestattet und anderseits ein Anstoßen an diesen Schlitzen 8.1 und 8.2 des in der Schutzeinrichtung 7 geführten Betonstabstahls 1 ausschließen.

Wie in der oberen Darstellung der Fig. 2 gezeigt ist, sind die Schlitze 8.1 und 8.2, ebenso wie die diese durchdringenden Laserstrahlen S₁ und S₂ in der zur Längsachse des Betonstabstahls 1 senkrechten Querschnittsebene um einen Winkel γ versetzt, der im vorliegenden Fall 90° beträgt.

Die optische Meßeinrichtung aus den Sendern 4 und 5 und den Empfängern 4' und 5' der Laserscanner, ebenso wie die Schutzeinrichtung 7 mit ihren fixierten Teilstücken 7.1, 7.2, 7.3 und 7.4 sind innerhalb des Gestells 3 drehbar gelagert, so daß sie eine synchrone Dreh- oder Drehpendelbewegung ausführen können.

Wie in der Fig. 1 zu erkennen ist, erfolgt die Drehpendelbewegung um einen bestimmten Winkel δ derart, daß die Laserstrahlen S₁ und S₂ um einen Fixpunkt in der Meßstelle 2, also dort, wo die Laserstrahlen S₁ und S₂ die Längsachse des Betonstabstahls 1 schneiden, eine begrenzte Kreiselbewegung vollführen.

Zur Abdeckung der gesamten Umfangsfläche von 360° des Betonstabstahls 1 genügt bei zwei um 90° zueinander versetzten Laserstrahlen S₁ und S₂ hierbei ein Winkel δ von +/- 90°.

## Patentansprüche

1. Verfahren zur optischen Erfassung von Abmessungen, insbesondere von Durchmessern, eines länglichen Objekts während oder nach dessen Herstellung, das sich in seiner Längsrichtung kontinuierlich fortbewegt, bei dem ein Lichtstrahl die Längsachse des Objekts an einer Meßstelle in einem bestimmten Winkel (α) und ein zweiter Lichtstrahl die Längsachse des Objekts an dieser Meßstelle in einem bestimmten Winkel (β) schneidet und die so gebildeten Schatten detektiert werden, wobei die Lichtstrahlen in der zu der Längsachse des Objekts senkrechten Querschnittsebene zueinander um einen bestimmten Winkel (γ) versetzt sind,
**dadurch gekennzeichnet,**
**daß** die Winkel (α) und (β) flache Winkel darstellen und
**daß** der Winkel (α) zumindest in etwa dem Winkel (β) entspricht.

2. Verfahren nach Anspruch 1,
**dadurch gekennzeichnet,**
**daß** die Winkel (α) und (β) 10 bis 40° und insbesondere etwa 20° betragen.

3. Verfahren nach Anspruch 1 oder 2,
**dadurch gekennzeichnet,**
**daß** die Lichtstrahlen (S₁,S₂) im wesentlichen um die Längsachse des Objekts (1) durch den Fixpunkt der Meßstelle (2) kreiseln und eine begrenzte Kreiselbewegung vollführen, indem sie um einen insbesondere im wesentlichen +/- 90° betragenden Winkel (δ) hin und her pendeln.

4. Verfahren nach einem der Ansprüche 1 bis 3,
**dadurch gekennzeichnet,**
**daß** der Winkel (γ) im wesentlichen 90° beträgt.

5. Verfahren nach einem der Ansprüche 1 bis 5,
**dadurch gekennzeichnet,**
**daß** es sich bei den Lichtstrahlen (S₁,S₂) um Laserstrahlen handelt und daß es sich bei dem Objekt (1) um einen profilierten Betonstabstahl handelt.

6. Vorrichtung zur Durchführung des Verfahrens nach einem der Ansprüchen 1 bis 5, aufgebaut aus einem Gestell (3), das von einem länglichen Objekt (1) im wesentlichen in seiner Längsrichtung durchlaufen werden kann, und aus einer auf dem Gestell (3) angeordneten optischen Messeinrichtung, die eine erste Lichtquelle (4) mit einem gegenüberliegenden Empfänger (4') und eine zweite Lichtquelle (5) mit einem gegenüberliegenden Empfänger (5') aufweist, wobei die Lichtquellen (4,5) und deren Empfänger (4',5') auf dem Gestell derart angeordnet sind, daß ihre Strahlengänge zueinander um den Winkel (γ) versetzt sind,
**gekennzeichnet durch**
eine zwischen den Lichtquellen (4,5) und den Empfängern (4',5') angeordnete Schutzeinrichtung (7), in der das durchlaufende Objekt (1) führbar ist.

7. Vorrichtung nach Anspruch 6,
**dadurch gekennzeichnet,**
**daß** die Schutzvorrichtung (7) einen ersten Schlitz (8.1), der diese in einem Winkel (α) durchsetzt, und einen zweiten Schlitz (8.2) aufweist, der diese in einem Winkel (β) durchsetzt, wobei sich die Schlitze (8.1,8.2), die jeweils von den entsprechenden Lichtstrahlen (S₁,S₂) durchquert werden, unter Ausbildung der Meßstelle (2) unter einem Winkel (γ) schneiden, wobei die Winkel (α), (β) und (γ) die in den Ansprüchen 1 bis 5 angegebenen Werte besitzen.

8. Vorrichtung nach Anspruch 6 oder 7,
**dadurch gekennzeichnet,**
**daß** einerseits die Schutzeinrichtung (7) in einer Halterung (6) des Gestells (3) und andererseits die optische Messeinrichtung in dem Gestell (3) um die Längsachse des durchlaufenden Objekts (1) drehbar gelagert sind und
**daß** die optische Messeinrichtung und die Schutzeinrichtung (7) jeweils separate Antriebsmechanismen, die synchron angesteuert sind, oder einen gemeinsamen Antriebsmechanismus aufweisen.

9. Vorrichtung nach einem der Ansprüche 6 bis 8,
**dadurch gekennzeichnet,**
**daß** es ich bei den Lichtquellen (4,5) und deren Empfängern (4',5') um Laserscanner handelt.

10. Vorrichtung nach einem der Ansprüche 6 bis 9,
**dadurch gekennzeichnet,**
**daß** das Gestell (3) am Austritt einer Stahlwälzvorrichtung angeordnet ist.

## Claims

1. A process for optically detecting during the production or following the production the measurements, particularly the diameters, of a long object moving continuously in lengthwise direction, which method provides for one light beam to intersect with the longitudinal axis of the object at a specific angle (α) at a measuring location and for a second light beam to intersect with the longitudinal axis of the object at this same measuring location at a specific angle (β), that the shadows formed thereby are detected, wherein the light beams are offset relative to each other in a cross- sectional plane that is perpendicular to the longitudinal axis of the object by a specific angle (γ),
**characterized in that**
the angles (α) and (β) represent flat angles and that the angle (α) corresponds at least approximately to the angle (β).

2. Process according to claim 1
**characterized in that**
the angles (α) and (β) measure 10 to 40° and in particular approximately 20°.

3. Process according to claim 1 or 2,
**characterized in that**
the light beams (S₁, S₂) essentially gyrate around the longitudinal axis of the object (1), through the fixed point at the measuring location (2), and perform a limited gyrating movement by oscillating back and forth, in particular by an angle (δ) measuring essentially +/- 90°.

4. Method according to one of the claims 1 to 3,
**characterized in that**
the angle (γ) essentially measures 90°.

5. Process according to one of the claims 1 to 4,
**characterized in that**
the light beams (S₁, S₂) are laser beams and the object (1) is a profiled concrete reinforcing steel rod.

6. A device for realizing the process according to one of the claims 1 to 5, consisting of a frame (3) through which a long object (1) can move essentially in lengthwise direction, as well as an optical measuring device having a first light source (4) with an opposite arranged receiver (4') and a second light source (5) with an opposite arranged receiver (5'), wherein the light sources (4, 5) and their receivers (4', 5') are arranged on the frame in such a way that their beam paths are offset relative to each other by the angle (γ),
**characterized by**
a protective device (7) in which the moving object (1) is guidable between the light sources (4, 5) and the receivers (4', 5').

7. Device according to claim 6,
**characterized in that**
the protective device (7) is provided with a first slot (8. 1) that penetrates at angle (α) and a second slot (8.2) that penetrates at angle (β), wherein the individual slots (8.1, 8.2), through which the corresponding light beams (S₁, S₂) pass, intersect at an angle (γ) and form the measuring location (2) and wherein the angles (α), (β) and (γ) have the values specified in claims 1 to 5.

8. Device according to claim 6 or 7,
**characterized in that**
the protective device (7) is positioned in a holder (6) of the frame (3) and the optical measuring device is positioned in the frame (3), such that they can rotate around the longitudinal axis of the object (1) that is passing through
and that the optical measuring device and the protective device (7) respectively have separate drive mechanisms that are controlled synchronously or have a joint drive mechanism.

9. Device according to one of the claims 6 to 8,
**characterized in that**
the light sources (4, 5) and their receivers (4', 5') are laser scanners.

10. Device according to one of the claims 6 to 9,
**characterized in that**
the frame (3) is arranged at the outlet for a steel rolling plant.

## Revendications

1. Procédé d'acquisition optique de dimensions, en particulier de diamètres, d'un objet longitudinal, pendant ou après sa fabrication, qui se déplace continuellement dans la direction de sa longueur, dans lequel un rayon lumineux coupe l'axe longitudinal de l'objet en un point de mesure selon un certain angle (α) et un deuxième rayon lumineux coupe l'axe longitudinal de l'objet en ce point de mesure selon un certain angle (β) et où les ombres ainsi formées sont détectées, les rayons lumineux étant décalés d'un certain angle (γ) l'un par rapport à l'autre dans le plan de section transversale perpendiculaire à l'axe longitudinal de l'objet,
**caractérisé en ce que**
les angles (α) et (β) sont des angles plats et que l'angle (α) correspond au moins approximativement à l'angle (β).

2. Procédé selon la revendication 1,
**caractérisé en ce que**
les angles (α) et (β) ont une mesure comprise entre 10 ° et 40 °, en particulier, d'environ 20 °.

3. Procédé selon la revendication 1 ou 2,
**caractérisé en ce que**
les rayons lumineux (S₁, S₂) tournent, pour l'essentiel, autour de l'axe longitudinal de l'objet (1) par le point fixe du point de mesure (2) et accomplissent un mouvement limité de toupie en se balançant en aller-retour selon un angle (δ), en particulier, pour l'essentiel, de ± 90 °.

4. Procédé selon l'une quelconque des revendications 1 à 3,
**caractérisé en ce que**
l'angle (γ) a, pour l'essentiel, une mesure de 90 °.

5. Procédé selon l'une quelconque des revendications 1 à 5,
**caractérisé en ce que**,
dans le cas des rayons lumineux (S₁, S₂), il s'agit de rayons laser et que, dans le cas de l'objet (1), il s'agit d'un fer à béton profilé.

6. Dispositif pour appliquer le procédé selon l'une quelconque des revendications 1 à 5, constitué d'un bâti (3) que peut parcourir un objet longitudinal (1), pour l'essentiel dans sa direction longitudinale, et d'un dispositif optique de mesure disposé sur le bâti (3), qui présente une première source de lumière (4) avec un récepteur (4') figurant en face et une deuxième source de lumière (5) avec un récepteur (5') figurant en face, les sources de lumière (4, 5) et leurs récepteurs (4', 5') étant disposés de manière telle sur le bâti que les trajectoires de leurs faisceaux sont décalées de l'angle (γ) l'une par rapport à l'autre,
**caractérisé par**
un dispositif de protection (7) disposé entre les sources de lumières (4, 5) et les récepteurs (4', 5') dans lequel peut être conduit l'objet (1) effectuant le parcours.

7. Dispositif selon la revendication 6,
**caractérisé en ce que**
le dispositif de protection (7) présente une première fente (8.1) traversant celui-ci selon un angle (α) et une deuxième fente (8.2) qui traverse celui-ci selon un angle (β), les fentes (8.1, 8.2), qui sont chaque fois croisées par les rayons lumineux (S₁, S₂) correspondants, se coupant selon un angle (γ) en formant le point de mesure (2), et les angles (α), (β) et (γ) ayant les valeurs indiquées dans les revendication 1 à 5.

8. Dispositif selon la revendication 6 ou 7,
**caractérisé en ce que**,
d'une part, le dispositif de protection (7) et, d'autre part, le dispositif optique de mesure sont respectivement logés dans une fixation (6) du bâti (3) et dans le bâti (3) de façon à pouvoir pivoter autour de l'axe longitudinal de l'objet (1) effectuant le parcours
et que
le dispositif optique de mesure et le dispositif de protection (7) présentent des mécanismes d'entraînement chaque fois séparés, commandés de façon synchrone, ou un mécanisme d'entraînement commun.

9. Dispositif l'une quelconque des revendications 6 à 8,
**caractérisé en ce que**
il s'agit, dans le cas des sources de lumière (4, 5) et de leurs récepteurs (4', 5'), d'un scanneur à laser.

10. Dispositif selon la revendication 1,
**caractérisé en ce que**
le bâti (3) est disposé à la sortie d'un dispositif de laminage de l'acier.
